# EUROPÄISCHE PATENTSCHRIFT

(11) **EP 1 666 337 B1**
(45) Veröffentlichungstag und Bekanntmachung des Hinweises auf die Patenterteilung: **20.02.2008**
(21) Anmeldenummer: 05109705.3
(22) Anmeldetag: 19.10.2005
(51) Int. Cl.: B62D 5/04, B60Q 9/00, B62D 1/04

(54) **Taktile Signalisierung**
Tactile signalling means
Signalisation tactile

(30) Priorität: 02.12.2004 DE 102004000060
(43) Veröffentlichungstag der Anmeldung: 07.06.2006
(73) Patentinhaber: Ford Global Technologies, LLC, Dearborn, MI 48126 (US)
(72) Erfinder: Kees, Markus, 41516 Grevenbroich (DE); Maurice, Jan Pieter, 6461 NA, Kerkrade (AN); Seibertz, Achim, 52064 Aachen (DE); Requejo, Julian, 52062 Aachen (DE)
(74) Vertreter: Drömer, Hans-Carsten

(56) Entgegenhaltungen:
- WO-A-02/057116
- DE-A1- 10 012 023
- US-A- 5 271 475
- US-A1- 2003 070 863

## Beschreibung

Die Erfindung betrifft ein Kraftfahrzeug mit einer Überwachungseinheit gemäß dem Oberbegriff des Anspruchs 1, die eine fehlerfreie Funktionalität von zumindest einer Bedienungseinheit des Kraftfahrzeuges überwacht und Warnsignale bei grenzwertigen Funktionen der zumindest einen Bedienungseinheit erzeugt.

Derartige Kraftfahrzeuge sind bekannt. Derzeit werden Kraftfahrzeuge mit einem Lenkhilfssystem, einer so genannten Servolenkung, ausgerüstet, um Lenkanstrengungen für den Fahrer zu reduzieren. Einerseits wird die Servolenkung eingesetzt, um das Handling im Stadtverkehr bei geringen Geschwindigkeiten des Kraftfahrzeuges zu erleichtern, wobei andererseits bei hohen Geschwindigkeiten des Kraftfahrzeuges ein direktes Lenkgefühl für den Fahrer bereitgestellt wird. Die meisten Kraftfahrzeuge nutzen hierzu eine hydraulische Servolenkung (HPAS). Es sind aber auch elektrische Servolenkungen (EPAS) bekannt. Diese benutzen anstelle eines hydraulischen Fluids einen elektrischen Motor und ein Getriebe, um dem Lenksystem die Hilfskraft zur Verfügung zu stellen. Aber auch so genannte Steer-By-Wire-Systeme sind in Entwicklung, bei denen die Fahrzeugreifen mechanisch von dem Lenkrad entkoppelt sind. Diese weisen einen zusätzlichen elektrischen Motor auf, um eine Rückkopplung zum Fahrer zu generieren.

Die EP 1 183 176 B1 betrifft eine Lenkvorrichtung für ein untersteuernd ausgelegtes Kraftfahrzeug mit lenkbaren Vorderrädern, mit einem von einem Fahrer gegen die Wirkung einer Lenkkraft bzw. eines Lenkmomentes betätigbaren Lenkorgan, und mit mindestens einem auf die lenkbaren Räder wirkenden, von einer elektronischen Steuereinrichtung beeinflußbaren Aktuator für den Einschlagwinkel der lenkbaren Räder. Es ist eine Einrichtung zur Ermittlung eines an den lenkbaren Rädern auftretenden Querschlupfes vorgesehen. In der elektronischen Steuereinrichtung ist ein oberer Grenzwert für den Querschlupf ermittelbar, wobei ein Mittel vorgesehen ist, welches dazu dient, einer weiteren Vergrößerung des Einschlagwinkels entgegenzuwirken, wenn der ermittelte Querschlupf größer ist als der obere Grenzwert.

Die EP 1 183 176 B1 betrifft aber auch ein Lenkverfahren für die Lenkvorrichtung. Von dem Lenkorganaktuator wird ein Vibrieren des Lenkorgans erzeugt, wenn der ermittelte Querschlupf größer ist als der obere Grenzwert. Das in der EP 1 183 176 B1 offenbarte Lenkverfahren soll sich insbesondere für Steer-By-Wire-Systeme eignen. Es soll aber auch bei hilfskraftunterstützten hydraulischen oder elektrischen Lenkungen mit starrer mechanischer Verbindung zwischen Lenkorgan und lenkbaren Rädern verwendet werden können.

Die DE 100 41 178 A1 betrifft eine Bedieneinrichtung zur Steuerung eines Kraftfahrzeuges mit einem in mehreren Freiheitsgraden bewegbaren Bedienelement. Das Bedienelement ist taktil rückmeldend, wobei in allen Betätigungsfreiheitsgraden taktile Rückmeldungen über entsprechende Steller zur fühlbaren Meldung des Erreichens oder Bevorstehens von Grenzsituationen des Fahrzeugs generierbar sind.

Die EP 0 856 453 A2 offenbart ein elektrohydraulisches Lenksystem für Fahrzeuge, das eine manuelle Lenkung und eine automatische Lenkung (Autopilot), welche über einen Schalter aktivierbar ist, umfaßt. Das elektrohydraulische Lenksystem besteht aus mindestens einem hydraulischen Lenkzylinder zur Verstellung der lenkbaren Räder, mindestens einem Sensor zur Ermittlung jeweils der Radeinschlagwinkel-Istwerte, mindestens einem elektrisch betätigbaren hydraulischen Steuerventil, welches die Beaufschlagung des Lenkzylinders mit Hydraulikflüssigkeit regelt, mindestens einem automatischen Lenksignalgeber zur Erzeugung von elektrischen Lenksignal-Sollwerten für die Radeinschlagwinkel, einer elektronischen Steuer- und Auswerteeinrichtung, wobei der Steuer- und Auswerteeinrichtung jeweils die automatisch erzeugten Lenksignal-Sollwerte und die Radeinschlagwinkel-Istwerte zugeführt werden, wobei die Steuer- und Auswerteeinrichtung unter Verwendung des Radeinschlagwinkel-Istwertes und des automatisch erzeugten Lenksignal-Sollwertes jeweils ein elektrisches Ansteuersignal für das hydraulische Steuerventil ermittelt. Für die manuelle Lenkung ist ein Lenksignalgeber vorgesehen, der aus einer manuellen Stellbewegung einen dazu entsprechenden elektrischen Lenksignal-Sollwert erzeugt, wobei dieser Lenksignal-Sollwert einer Steuer- und Auswerteeinrichtung, welche auch die jeweiligen Radeinschlagwinkel-Istwerte empfängt, zugeführt wird. Die Steuer- und Auswerteeinrichtung ermittelt unter Verwendung des Radeinschlagwinkel-Istwertes und des manuell erzeugten Lenksignal-Sollwertes ein elektrisches Ansteuersignal für das hydraulische Steuerventil.

Die US 6,370,460 B1 offenbart ein Steer-By-Wire-Steuersystem, umfassend:
- eine Fahrzeugreifeneinheit, welche auf Fahrzeugreifen Steuersignale zum Steuern des Fahrzeugs anspricht;
- eine Lenkradeinheit, welche auf Lenkmoment-Steuersignale anspricht;
- einen Fahrzeug-Geschwindigkeitssensor, um ein Fahrzeug-Geschwindigkeitssignal zu erzeugen;
- eine Hauptsteuereinheit, welche elektrisch ausgestaltet und mit dem Fahrzeug-Geschwindigkeitssensor, der Lenkradeinheit und der Fahrzeugreifeneinheit verbunden ist;
- wobei die Fahrzeugreifeneinheit einen Fahrzeugreifen-Positionssensor und einen Spurstangensensor aufweist, um ein Spurstangen-Kraftsignal zu erzeugen und zu übertragen;
- wobei die Lenkradeinheit einen Lenkrad-Positionssensor aufweist, um ein Lenkrad-Positionssignal zu erzeugen und zu übertragen und wobei die Lenkradeinheit einen Kraftsensor aufweist, um ein Rückkopplungs-Momentensignal zu erzeugen und zu übertragen;
- die Hauptsteuereinheit weist eine Positionssteuereinheit auf, die das Fahrzeugreifensteuersignal im Vergleich zum Geschwindigkeitssignal, dem Rückkopplungs-Momentensignal und dem Lenkrad-Positionssignal berechnet;
- die Hauptsteuereinheit generiert ein entgegengesetztes Spurstangen-kraftsignal; und
- die Hauptsteuereinheit weist eine Kraftsteuereinheit auf, die das Lenkrad-Kraftsteuersignal im Vergleich zu dem entgegengesetzten Spurstangen-kraftsignal, dem Rückkopplungs-Momentensignal, dem Lenkrad-Positionssignal und dem Geschwindigkeitssignal berechnet und erzeugt.

In der US 6,535,806 B2 wird ebenfalls ein Steer-By-Wire-System offenbart, welches umfaßt:
- ein Lenkrad;
- einen Lenkradsensor, der relativ zu dem Lenkrad angeordnet ist, um dessen Position zu bestimmen und um ein Anzeigesignal der Position des Lenkrades zu erzeugen;
- eine Rücksteuereinheit, um ein Anzeigesignal einer aktuellen Fahrzeugrichtung zur Verfügung zu stellen;
- ein Steuergerät, das mit dem Lenkradsensor der Rücksteuereinheit in Verbindung steht, um das Anzeigesignal der Position des Lenkrades von dem Lenkradsensor und das Anzeigesignal der aktuellen Fahrzeugrichtung von der Rücksteuereinheit zu erhalten und um ein Anzeigesignal eines erforderlichen Lenkrad-Rückkopplungsmomentes zu erzeugen; und
- eine taktile Rückmeldevorrichtung, welche mit dem Steuergerät, das die Anzeigesignale des erforderlichen Lenkradrückmeldemomentes erhält, in Verbindung steht und dem Lenkrad eine dazu korrespondierende Kraft zur Verfügung stellt.

Die US 5,271,475 offenbart eine Überwachungseinrichtung für eine Lenkeinrichtung, die die Merkmale des Oberbegriffs des Anspruchs 1 aufweist. Wenn die Überwachungseinrichtung eine Fehlfunktion der Lenkeichrichtung detektiert, wird diese Fehlfunktion dem Fahrer sowohl mit einem optischen Anzeigemittel als auch gleichzeitig mittels einer Vibration mitgeteilt.

Die DE 100 12 023 A1 offenbart ein Verfahren zur Überwachung der Funktion einer optischen Anzeige für eine beliebige Kraftfahrzeugfunktion. Zum Vermeiden einer Überflutung des Fahrers mit Warnsignalen schlägt die DE 100 12 023 A1 vor, dass die optische Anzeige auf Funktionsfähigkeit überprüft wird, wobei beispielsweise ein taktiles Signal erzeugt wird, wenn die optische Anzeige defekt ist. Dieses taktile Signal wird aber nur dann übermittelt, wenn die optische Anzeige defekt ist, und nicht wenn die beliebige Kraftfahrzeugfunktion eine Fehlfunktion aufweist.

Die WO02/057116 offenbart eine Warnvorrichtung in einem bodengebundenen Kraftfahrzeug, umfassend eine Warnvorrichtung mit einer Bewegungserzeugungsanordnung, zur Erzeugung einer als Bewegung fühlbaren Warnung. Die Bewegungserzeugungsanordnung ist ausschließlich zur Erzeugung der Warnung vorgesehen, und beispielsweise in einem Lenkrad integriert. Die Bewegungserzeugungsanordnung kann einen Defekt eines Bauteils des Kraftfahrzeuges anzeigen.

Als ein genereller Nachteil der bekannten Kraftfahrzeuge mit den hydraulischen bzw. elektrischen Servolenkungen oder auch des Steer-By-Wire-Systems ist anzusehen, daß diese bestimmten Serviceintervallen unterliegen, wobei nicht nur bei Nichtbeachtung der Serviceintervalle die vorgenannten Lenkhilfen ausfallen können oder zumindest in ihrer Funktionalität eingeschränkt sein können. Von daher ist es sinnvoll, diese beispielhaft genannte Bedienungseinheit zu überwachen, so daß dem Fahrer des Kraftfahrzeuges frühzeitig eine Fehlfunktion mitgeteilt werden kann. Üblicherweise geschieht dies bei herkömmlichen Kraftfahrzeugen mittels akustischer oder visueller Anzeige. In derzeitigen Kraftfahrzeugen wird der Fahrer aber mit einer ansteigenden Anzahl von akustischen und/oder visuellen Signalen konfrontiert. Dies stellt eine hohe Belastung von visuellen und/oder akustischen Meldungen dar, welche die Aufmerksamkeit des Fahrers vom laufenden Verkehr ablenkt, um die jeweiligen Anzeigegeräte wahrzunehmen. Insbesondere die visuellen Anzeigen können hierfür verantwortlich sein, da diese häufig außerhalb des zur Beobachtung des Straßenverkehrs notwendigen Blickfeldes liegen.

Von daher liegt der Erfindung die Aufgabe zugrunde, ein Kraftfahrzeug der eingangs genannten Art mit einfachen Mitteln dahin gehend zu verbessern, daß der Fahrer des Kraftfahrzeuges in seiner Aufmerksamkeit nicht gestört wird, wenn diesem ein Warnsignal angezeigt werden soll.

Erfindungsgemäß wird die Aufgabe durch ein Kraftfahrzeug mit einer Überwachungseinheit mit den Merkmalen des Anspruchs 1 gelöst, wobei die Überwachungseinheit als Warnsignale taktile Signale erzeugt, so daß Fehlfunktionen der zumindest einen Bedienungseinheit einem Fahrer des Kraftfahrzeuges haptisch übermittelbar sind.

Mit der erfindungsgemäßen Lösung wird erreicht, daß der Fahrer des Kraftfahrzeugs eine mögliche Fehlfunktion der zumindest einen Bedienungseinheit frühzeitig zur Kenntnis nimmt, ohne daß die Warnsignale übersehen und/oder ignoriert werden. Die taktile Signalisierung beginnt bei sicherheitsüberwachenden Funktionen bevorzugt in unkritischen Fahrsituationen, beispielsweise bei einer niedrigen Geschwindigkeit des Kraftfahrzeugs und/oder bei einer Geradeausfahrt des Kraftfahrzeugs. Durch die Signalisierung in vorzugsweise unkritischen Fahrsituationen wird der Fahrer mittels der taktilen Signalisierung in der Fahrsituation nicht beeinflußt bzw. beeinträchtigt.

Günstig im Sinne der Erfindung ist vorgesehen, daß die Überwachungseinheit ein Lenkelement, bevorzugt ein Lenkrad des Kraftfahrzeuges, in Vibrationen versetzt. Zweckmäßigerweise kann die Bedienungseinheit als Lenkeinrichtung ausgestaltet sein, die einen elektrischen Aktuator aufweist. Die Lenkeinrichtung kann beispielsweise mit einer elektrischen Servolenkung (EPAS) versehen oder auch als Steer-By-Wire-System ausgeführt sein. Diese Technologien weisen günstigerweise einen Aktuator auf, der eine Implementation der taktilen Rückmeldung erlaubt. Diese taktile Rückmeldung wird bevorzugt mittels einer Vibration des Lenkrades realisiert, die den Fahrer über einen Betriebszustand bzw. die Funktionalität der zumindest einen Bedienungseinheit unterrichtet.

Zweckmäßig ist hierbei, daß die Überwachungseinheit die Funktionalität der Bedienungseinheit überwacht. Detektiert die Überwachungseinheit, daß die Bedienungseinheit einen Defekt aufweist, so daß die Bedienungseinheit Gefahr läuft, außer Betrieb gesetzt zu werden, bewirkt die Überwachungseinheit eine Vibration des Lenkrades, bevorzugt eine permanente Vibration des Lenkrades, um den Fahrer darauf hinzuweisen, daß die Bedienungseinheit bzw. das System gewartet bzw. repariert werden muß.

Günstigerweise ist hierbei vorgesehen, daß die Basisfunktionalität des Lenkgefühls und der Lenkleistung unter normalen Betriebsbedingungen nicht beeinflußt wird. Das taktile Signal erzeugt bevorzugt eine Vibration mit einer bestimmten Amplitude und einer definierten Frequenz, welche zu den normalen Funktionen addiert wird und so vom Fahrer haptisch wahrgenommen wird. Zudem ist vorteilhaft vorgesehen, daß der Fahrer während seiner Lenkaktivitäten nicht gestört wird. Beispielsweise kann die Vibration erzeugt werden, wenn sich das Fahrzeug in einer unkritischen Fahrsituation befindet, z. B. nach dem Einschalten des Motors, oder bei Stadtgeschwindigkeit und/oder Geradeausfahrt.

Möglich ist selbstverständlich auch, daß die Vibration erzeugt werden kann, wenn Grenzwerte erreicht werden, bei denen das Kraftfahrzeug seine physikalischen Grenzen überschreiten könnte, um den Fahrer vor dieser kritischen Situation zu warnen. Diese Grenzwerte können beispielsweise von einem elektronischen Stabilitätsprogramm (ESP) oder anderen Bestandteilen einer Fahrdynamikregelung ermittelt werden.

Vorteilhafterweise wird insgesamt ein Kraftfahrzeug zur Verfügung gestellt, das mit einfachen Mitteln dahin gehend verbessert ist, daß der Fahrer des Kraftfahrzeuges in seiner Aufmerksamkeit nicht beeinträchtigt wird, wenn ihm angezeigt wird, daß beispielsweise eine Bedienungseinheit zum Beispiel die Lenkeinrichtung gewartet und/oder repariert werden muß. Mit üblichen, bekannten Warnsystemen könnte es vorkommen, daß der Fahrer die erzeugten visuellen und/oder akustischen Warnsignale ignoriert bzw. übersieht. Das von der Überwachungseinheit erzeugte taktile Signal dagegen läßt beispielsweise das Lenkrad vibrieren, so daß eine mögliche Wartung der Bedienungseinheit permanent angezeigt wird, wobei sichergestellt ist, daß das Warnsignal bzw. das Gefahrsignal nicht übersehen bzw. ignoriert wird, da der Fahrer zumindest eine Hand stets am Lenkrad hält, wenn das Kraftfahrzeug bewegt wird. Dies ist insbesondere für die Fahrsicherheit wichtig, denn wenn zum Beispiel die zumindest eine Bedienungseinheit beispielsweise die Lenkeinrichtung Gefahr läuft auszufallen bzw. defekt ist, wird dies dem Fahrer haptisch durch die Vibrationen des Lenkrades mitgeteilt. Günstig ist hierbei, wenn das taktile Signal solange anliegt, bis die Überwachungseinheit zurückgestellt wird, was bevorzugt von autorisierten Fachkräften durchführbar ist, wenn die Fehlfunktion der Bedienungseinheit behoben ist. Selbstverständlich kann das taktile Signal nicht nur permanent an dem Lenkrad anliegen. Denkbar ist auch, daß das taktile Signal in vorgegebenen Zeitabständen alternierend an dem Lenkrad anliegt. Die Überwachungseinheit kann zudem in ein Hauptsteuergerät des Kraftfahrzeugs integriert sein.

Weitere vorteilhafte Ausgestaltungen sind in den Unteransprüchen und der folgenden Figurenbeschreibung offenbart. Es zeigen:
- Fig. 1: Ein Diagramm einer beispielhaft überwachten Bedienungseinheit, und
- Fig. 2: ein Diagramm für ein beispielhaftes Fahrzeugstabilitätskriterium.

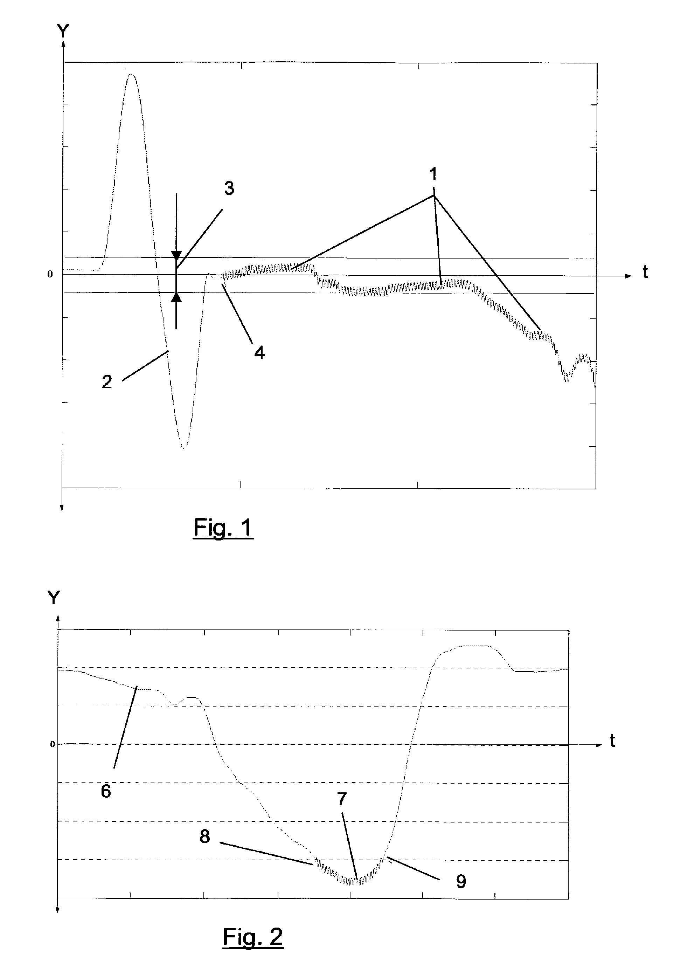

In Figur 1 ist beispielhaft eine überwachte Bedienungseinheit dargestellt. Die Bedienungseinheit kann beispielsweise eine Lenkeinrichtung mit Servolenkung sein. Die Servolenkung weist beispielsweise eine elektrische Hilfseinrichtung auf, so daß auch von so genannten elektrischen Servolenkungen (EPAS) gesprochen werden kann. Die Servolenkung kann aber auch nach dem Prinzip des Steer-By-Wire-Systems ausgeführt sein. In Figur 1 ist beispielhaft ein Lenkradwinkel Y über die Zeit t dargestellt.

Der Bedienungseinheit bzw. Lenkeinrichtung ist eine Überwachungseinheit zugeordnet, welche die Funktionalität der Bedienungseinheit bzw. der Lenkeinrichtung des Kraftfahrzeuges überwacht und ein Warnsignal 1 bei grenzwertigen Funktionen der Bedienungseinheit bzw. der Lenkeinrichtung erzeugt. Die Überwachungseinheit erzeugt als Warnsignale taktile Signale, so daß Fehlfunktionen der zumindest einen Bedienungseinheit bzw. der Lenkeinrichtung einem Fahrer des Kraftfahrzeuges haptisch übermittelbar sind. Das taktile Warnsignal 1 ist in Figur 1 gezackt dargestellt.

Fehlfunktionen der Bedienungseinheit bzw. der Lenkeinrichtung können beispielsweise vorliegen, wenn ein Serviceintervall überschritten wurde, ohne daß die Bedienungseinheit bzw. die Lenkeinrichtung gewartet wurde. Selbstverständlich können aber auch jegliche Fehlfunktionen mechanischer und/oder elektrischer Art vorliegen. Tritt eine solche Fehlfunktion auf, detektiert die Überwachungseinheit dies, so daß beispielsweise ein Lenkelement bzw. Lenkrad des Kraftfahrzeuges in Vibrationen versetzt wird. Die Vibrationen können permanent an dem Lenkrad anliegen, bis die Bedienungseinheit gewartet bzw. repariert wurde. Zudem kann die Vibration in einer vorgegebenen Intensität und Frequenz an dem Lenkrad angelegt werden.

Bei der überwachten Bedienungseinheit tritt ein von der Überwachungseinheit detektierter Fehler auf, der in Figur 1 beispielhaft mittels eines Ausschlages 2 dargestellt ist. Allerdings wird der Ausschlag 2 detektiert, wenn sich das Kraftfahrzeug in einer kritischen Situation befindet, so daß das taktile Warnsignal 1 zunächst nicht erzeugt wird, um den Fahrer nicht ungünstig zu beeinflussen, bzw. mit der Vibration des Lenkrades zu überraschen. Das taktile Warnsignal 1 wird somit etwas zeitversetzt zur tatsächlichen Detektion der Fehlfunktion bzw. der Überschreitung des Serviceintervalls erzeugt.

Erst wenn sich das Kraftfahrzeug in einem Bereich 3 einer unkritischen Fahrsituation befindet, wird das taktile Signal 1 an dem Punkt 4 erzeugt. Der Bereich 3 der unkritischen Fahrsituation ist in der Überwachungseinheit beispielsweise mittels eines bestimmten Fahrzeugkriteriums voreinstellbar, so daß ein unkritischer Fahrzustand definierbar ist.

In Figur 1 wird das taktile Warnsignal 1 permanent angelegt, so daß dieses dem Fahrer auch bei einer möglichen kritischen Fahrsituation eine Fehlfunktion der überwachten Bedienungseinheit übermittelt. Da sich der Fahrer aber bereits darauf einstellen konnte, daß eine solche Fehlfunktion vorliegt, ist der Überraschungseffekt des taktilen Warnsignals 1 entschärft, und wirkt sich nicht mehr ungünstig auf die Reaktionen des Fahrers aus. Von daher ist in Figur 1 beispielhaft dargestellt, daß das taktile Warnsignal 1 den Bereich 3 der unkritischen Fahrsituation verläßt und trotzdem beispielsweise das Lenkrad in Vibrationen versetzt. Selbstverständlich kann das taktile Warnsignal 1 auch sofort nach der Detektion der Fehlfunktion bzw. des überschrittenen Wartungsintervalls angelegt werden.

In Figur 2 ist in einer vorteilhaften Ausgestaltung der Erfindung dargestellt, daß eine Vibration an dem Lenkrad erzeugt wird, wenn ein Fahrzeugstabilitätskriterium einen kritischen Wert beispielsweise aufgrund eines Lenkradwinkels und der Fahrzeuggeschwindigkeit übersteigt. Hierbei ist besonders vorteilhaft, daß die Vibration die Lenktätigkeit lediglich überlagert, ohne die eigentliche Lenktätigkeit einzuschränken bzw. zu beschränken. Die Vibrationen sind in der Lenkkurve 6 jeweils als gezackter Bereich 7 dargestellt. Es wird dem Fahrer mittels der Vibration mitgeteilt, daß ein vorbestimmter absoluter Lenkradwinkel mit Bezug auf die momentan kritische Fahrsituation erreicht ist, so daß dieser frühzeitig eine erforderliche Gegenreaktion durchführen kann und den Lenkradwinkel verkleinern kann.

Das taktile Warnsignal 1 wird nach Figur 2 an einem Punkt 8 erzeugt, an dem ein kritischer Wert eines Fahrzeugstabilitätskriteriums überschritten wird, wobei das taktile Warnsignal 1 bei Verlassen des kritischen Bereiches (Punkt 9) abgeschaltet wird.

Selbstverständlich ist die Erfindung nicht auf die beispielhaft offenbarte Bedienungseinheit bzw. Lenkeinrichtung beschränkt. Möglich ist beispielsweise, daß die Überwachungseinheit sämtliche Bedienungseinheiten des Kraftfahrzeuges überwacht, wobei bei Fehlfunktionen die vorbeschriebenen Vibrationen an dem Lenkrad erzeugt werden. Damit ist sichergestellt, daß der Fahrer eine fehlerhafte Funktion der jeweiligen Bedienungseinheit frühzeitig wahrnimmt, ohne diese zu übersehen oder ignorieren zu können. Zudem wird damit die Vielfalt akustischer und/oder visueller Anzeigevorrichtungen verringert. Damit wird vorteilhaft auch erreicht, daß der Fahrer auch bei Anzeige von fehlerhaften Funktionalitäten der jeweiligen Bedienungseinheit in seiner Aufmerksamkeit nicht eingeschränkt wird. Natürlich kann die Überwachungseinheit auch mehrere Bedienungseinheiten gleichzeitig überwachen. Sinnvoll wäre hierbei, wenn die Überwachungseinheit jeweils in Frequenz und/oder Amplitude unterschiedliche Vibrationen erzeugt, die der jeweiligen Bedienungseinheit zugeordnet werden können, um ein rasches Beheben der Fehlerquelle sicherzustellen. Denkbar ist beispielsweise auch, wenn elektrische Anlagen des Kraftfahrzeuges, wie z. B. eine Lichtanlage und/oder Hinweisanlagen beispielsweise Bremslichter und/oder Fahrtrichtungsanzeiger (Blinker) auf ihre Funktionalität überwacht werden.

## Patentansprüche

1. Kraftfahrzeug mit einer Überwachungseinheit, die eine fehlerfreie Funktionalität von zumindest einer Bedienungseinheit des Kraftfahrzeuges überwacht und Warnsignale (1) bei grenzwertigen Funktionen der zumindest einen Bedienungseinheit erzeugt, wobei die Überwachungseinheit als Warnsignal taktile Signale (1) erzeugt, so daß Fehlfunktionen der zumindest einen Bedienungseinheit einem Fahrer des Kraftfahrzeuges haptisch übermittelbar sind,
**dadurch gekennzeichnet, daß**
das taktile Warnsignal (1) bei einer ersten Detektion der Fehlfunktion der zumindest einen Bedienungseinheit derart zeitversetzt erzeugt wird, daß dem Fahrer die haptische Übermittlung erst zur Kenntnis gelangt, wenn sich das Kraftfahrzeug in einer unkritischen Fahrsituation befindet, und wobei das taktile Warnsignal (1) permanent übermittelbar ist, nachdem das Kraftfahrzeug einen unkritischen Bereich (3) erreicht hat.

2. Kraftfahrzeug nach Anspruch 1,
**dadurch gekennzeichnet, daß**
die Überwachungseinheit ein Lenkelement des Kraftfahrzeuges in Vibrationen versetzt.

3. Kraftfahrzeug nach Anspruch 1 oder 2,
**dadurch gekennzeichnet, daß**
die Bedienungseinheit eine Lenkeinrichtung ist, die einen elektrischen Aktuator aufweist.

## Claims

1. Motor vehicle having a monitoring unit which monitors a fault-free functionality of at least one operator control unit of the motor vehicle and generates warning signals (1) in the case of limit-value functions of the at least one operator control unit, the monitoring unit generating tactile signals (1) as a warning signal so that malfunctions of the at least one operator control unit can be communicated haptically to a driver of the motor vehicle,
**characterized in that**,
when the malfunction of the at least one operator control unit is first detected, the tactile warning signal (1) is generated with a time offset such that the driver does not become aware of the haptic communication until the motor vehicle is in a noncritical driving situation and wherein the tactile warning signal (1) can be communicated continuously after the motor vehicle has reached a noncritical range (3).

2. Motor vehicle according to Claim 1,
**characterized in that**
the monitoring unit causes a steering element of the motor vehicle to vibrate.

3. Motor vehicle according to Claim 1 or 2,
**characterized in that**
the operator control unit is a steering device which has an electric actuator.

## Revendications

1. Véhicule automobile muni d'une unité de surveillance qui surveille une fonctionnalité exempte de défauts d'au moins une unité de commande du véhicule automobile et génère des signaux d'alerte (1) en cas de fonctionnement aux valeurs limites de l'au moins une unité de commande, l'unité de surveillance générant comme signal d'alerte des signaux tactiles (1) de sorte que les défauts de fonctionnement de l'au moins une unité de commande puissent être communiqués de manière sensorielle à un conducteur du véhicule automobile, **caractérisé en ce que** le signal d'alerte tactile (1), lors d'une première détection du défaut de fonctionnement de l'au moins une unité de commande, est généré avec un retard dans le temps de telle sorte que le conducteur ne prend connaissance de la communication sensorielle que si le véhicule automobile se trouve dans une situation de conduite non critique et le signal d'alerte tactile (1) pouvant être communiqué en permanence après que le véhicule automobile a gagné une zone non critique (3).

2. Véhicule automobile selon la revendication 1, **caractérisé en ce que** l'unité de surveillance fait vibrer un élément de direction du véhicule automobile.

3. Véhicule automobile selon la revendication 1 ou 2, **caractérisé en ce que** l'unité de commande est un dispositif de direction qui présente un actionneur électrique.
